**Europäisches Patentamt**

**European Patent Office**

**Office européen des brevets**

(11) Numéro de publication : **0 051 029**
**B1**

# (12) FASCICULE DE BREVET EUROPÉEN

(45) Date de publication du fascicule du brevet :
24.04.85

(21) Numéro de dépôt : 81401671.3

(22) Date de dépôt : 22.10.81

(51) Int. Cl.⁴ : **H 04 M 11/02, H 04 Q 7/04**

---

(54) Procédé et dispositif pour le regroupement d'informations transmises par l'intermédiaire d'appels téléphoniques de codes.

---

(30) Priorité : 23.10.80 FR 8022722

(43) Date de publication de la demande :
05.05.82 Bulletin 82/18

(45) Mention de la délivrance du brevet :
24.04.85 Bulletin 85/17

(84) Etats contractants désignés :
**AT BE CH DE GB IT LI LU NL SE**

(56) Documents cités :
**EP-A- 0 000 459**
**FR-A- 1 565 651**
**ELECTRONIQUE & APPLICATIONS INDUSTRIELLES,**
**no. 239, 15 juin 1977, PARIS (FR), M. HARDY: "Réali-**
**sation des systèmes d'appels sélectifs", pages 42-47**

(73) Titulaire : **ELECTRONIQUE SERGE DASSAULT**
**80, avenue Marceau**
**F-75008 PARIS (FR)**

**PARTNER INFORMATIQUE**
**32, Avenue de Gravelle**
**F-94220 Charenton (FR)**

(72) Inventeur : **Fumey, Michel**
**159, rue du Faubourg Poissonnière**
**F-75009 Paris (FR)**
Inventeur : **Maisons, Jacques-Christian**
**33, avenue de Gravelle**
**F-94220 Charenton (FR)**
Inventeur : **Demont, Michel**
**11, place Saint André des Arts**
**F-75006 Paris (FR)**

(74) Mandataire : **Netter, André et al**
**Cabinet NETTER 40, rue Vignon**
**F-75009 Paris (FR)**

## Description

La présente invention concerne les télécommunications et notamment les techniques de transmission d'informations par l'intermédiaire d'appels de codes, formés par exemple de suites de chiffres et/ou de lettres, à partir des points d'un réseau téléphonique.

On sait que les services de télécommunications ont mis en place des installations de retransmission, par voie hertzienne, d'appels en provenance de postes du réseau téléphonique qui permettent de délivrer sélectivement de tels appels à des récepteurs, dispersés et non reliés directement au réseau téléphonique, en fonction d'un code contenu dans l'appel lui-même et reconnu par l'un de ces récepteurs.

Un réseau de transmission d'appels connu comprend une ou plusieurs station(s) reliée(s) au réseau téléphonique ordinaire. Ces stations peuvent être appelées à partir des postes de ce réseau téléphonique en composant un numéro de code qui comprend un code d'identification de la station suivi d'un numéro de code, par exemple à six chiffres, caractéristique d'un destinataire ou d'un expéditeur particulier, ou porteur d'autres informations. La station est dotée d'un équipement de retransmission par ondes hertziennes des numéros de codes qu'elle reçoit en provenance du réseau téléphonique.

Un exemple d'un tel réseau, comprenant un ensemble de stations desservant chacune une région déterminée et raccordées aux réseaux téléphoniques, existe en Europe sous le nom de « Eurcsignal ». Ce système est actuellement utilisé par l'appel de personnes à l'aide de récepteurs de signaux hertziens émis par la station, récepteurs de faibles dimensions, qu'un abonné au système peut transporter avec lui ou sur lui. Chacun de ces récepteurs comporte un dispositif de décodage d'un code qui lui est affecté. Il produit un avertissement sonore et/ou lumineux lorsqu'il détecte un signal hertzien déclenché par un appel téléphonique de ce code par un correspondant.

La réception d'un tel appel revêt pour l'abonné une signification convenue d'avance. Le récepteur peut être équipé pour recevoir des appels de plusieurs codes, quatre par exemple, à chacun desquels est attachée une signification particulière, par exemple identifiant l'origine de l'appel.

« La Demande de Brevet Européen publiée sous le No 0 000 459 (Gottesman) concerne un ensemble d'affichage à distance de messages évolutifs qui trouve une application à un système de réservation de chambres d'hôtel à remise à jour automatique. Conformément à ce système, un émetteur est associé à un poste téléphonique grâce auquel le numéro de la station d'affichage peut être appelé par l'hôtelier et, lorsque la connexion est établie, une information de disponibilité peut être transmise par l'intermédiaire d'un coupleur. Ce coupleur est commuté au moment où la communication téléphonique est établie. A l'autre extrémité, un récepteur est prévu, qui comprend un dispositif sensible à la sonnerie du poste appelé pour mettre en commmunication la ligne téléphonique directement avec un ensemble logique 113, qui commande la transmission des signaux de disponibilité à un panneau d'affichage.

Ce système ne donne pas entièrement satisfaction, en ce qu'il est spécifiquement associé à un récepteur pourvu d'un numéro de code d'appel déterminé, ce qui ne permet pas d'effectuer simultanément à partir d'un point d'émission unique la remise à jour, par un seul appel, d'un ensemble de postes centralisateurs. De plus, des dispositifs additionnels sont nécessaires aussi bien à l'émission qu'à la réception, et leur mise en oeuvre entraîne des manipulations supplémentaires.

Le Brevet français No 1 565 651 (HALNAUT) vise un dispositif de transmission de signaux codés concernant la disponibilité de places télles que des chambres d'hôtel, places de spectacles, etc. Les signaux peuvent être transmis à un tableau d'affichage par une voie de transmission téléphonique, radio ou autre. Le tableau peut être consulté par exemple après introduction d'une pièce de monnaie. Là encore, ce système utilise la liaison téléphonique pour ses fonctions traditionnelles, et il doit être ajouté à cette liaison téléphonique des éléments additionnels aussi bien à l'émission qu'à la réception, ce qui s'accompagne des mêmes inconvénients que ci-dessus.

La présente invention vient apporter une solution intéressante à ces problèmes.

Le procédé selon l'invention fait intervenir des systèmes d'appels sélectifs à plusieurs tonalités, dont on connaît un exemple sous le nom « EURO-SIGNAL ». De tels systèmes sont décrits notamment dans le document ELECTRONIQUE ET APPLICATIONS INDUSTRIELLES (HARDY).

Alors que ces dispositifs sont utilisés jusqu'à présent pour l'appel sélectif de personnes, les Demanderesses proposent de s'en servir pour la collecte et le regroupement d'informations relatives à une pluralité de participants dispersés.

Le procédé proposé est du type dans lequel interviennent une pluralité de participants dispersés affectée chacun d'au moins un code respectif, auquel est associé un numéro d'appel téléphonique. On compose au moins un numéro constituant ce code à partir d'un poste téléphonique ordinaire, lequel transmet ce numéro par voie téléphonique vers un central d'appels téléphoniques propre à recevoir de tels appels de code en provenance des postes, et à les retransmettre vers au moins une station d'émission de signaux hertziens, laquelle transmet à son tour ces codes sous forme de signaux hertziens codés respectifs par une antenne.

Dans le procédé de l'invention, on reçoit et on décode lesdits signaux hertziens en au moins un poste de regroupement, pour reconnaître les codes respectifs, et on y enregistre les appels successifs correspondant à chaque code afin de tenir à jour en ce poste un état des informations relatives à chaque participant de l'ensemble.

La présente invention vise également un poste de regroupement d'informations pour la mise en oeuvre de ce procédé.

L'invention concerne un nouveau type d'utilisation d'un réseau tel que le précédent propre à la transmission d'appels opérés par la composition de numéros sur des postes téléphoniques.

Selon l'invention, on prévoit de permettre le regroupement d'informations concernant un ensemble de participants dispersés, à chacun desquels est affecté au moins un code, en transmettant ces informations par voie hertzienne vers un ou plusieurs lieux de regroupement à l'aide d'un réseau de transmission d'appels téléphoniques. Il est ainsi possible de disposer en ce lieu ou chacun de ces lieux d'un état desdites informations concernant les participants, qui est mis à jour par les appels successifs reçus. S'il y a plusieurs lieux de regroupement, cette mise à jour s'effectue simultanément en ces différents lieux. Elle permet de tenir à jour en chacun de ces lieux un fichier propre à être consulté par ou pour des utilisateurs différents ;

Le terme de « participant » est utilisé dans ce texte pour désigner toute entité relativement à laquelle on peut transmettre une information en appelant par téléphone au moins un code respectif dans le cadre d'une organisation propre à permettre le regroupement de ces informations en un ou plusieurs points quelconques à l'intérieur de la zone desservie par le réseau.

L'information transmise peut être représentée par un signal obtenu en composant un numéro sur un poste téléphonique en association avec le code appelé ou, selon un mode de réalisation préféré, par l'appel de ce code lui-même. Elle peut également résulter, pour un participant donné, d'une combinaison d'appels de tels codes.

L'invention peut être mise en oeuvre à l'aide d'un poste de regroupement d'informations relatives à un ensemble de participants dispersés affectés chacun d'au moins un code respectif, et transmises chacune par la composition sur un poste d'appel téléphonique d'au moins un numéro constitutif de ce code qui est retransmis sous la forme de signaux hertziens, caractérisé en ce qu'il comprend un récepteur de tels signaux hertziens, un décodeur propre à déchiffrer les signaux reçus pour reconnaître les codes correspondant auxdits participants, et des moyens d'enregistrement des appels successifs correspondant à chaque code pour tenir à jour un état des informations correspondantes relativement à chaque participant dudit ensemble.

Un tel poste de regroupement réalise ainsi la concentration d'informations relatives à un ensemble de participants dispersés, en un lieu où elles se trouvent disponibles à tout instant et où leur état peut être mis à jour par simple appel téléphonique. Les informations regroupées conformément à l'invention peuvent notamment concerner la disponibilité ou la non-disponibilité de participants tels que des prestataires de services, par exemple des hôtels. Dans ce dernier cas, le poste de regroupement est installé dans un lieu fréquenté par les voyageurs, aérogares ou syndicats d'initiatives par exemple.

Plusieurs postes de regroupement identiques sont avantageusement prévus dans un territoire donné desservi par le réseau de transmission d'appels pour la constitution de fichiers à mise à jour simultanée.

Afin d'exploiter les informations regroupées, le poste peut avantageusement comporter des moyens d'interrogation de la mémoire dans laquelle sont enregistrées les informations, et des moyens de présentation d'informations à la disposition des usagers en un lieu où peut être installé en permanence la poste. Il est avantageux également de prévoir que les moyens d'enregistrement associent à chaque code une capacité de stockage d'informations relativement détaillées relatives à chaque participant, telles que par exemple des numéros de téléphone et des adresses dans le cas de prestataires de sevices, ainsi que, éventuellement, certaines caractéristiques de spécialité et de localisation géographique. Les moyens d'interrogation à la disposition des utilisateurs du poste de regroupement peuvent alors être équipés de moyens pour effectuer une sélection parmi les participants en fonction de critères mis en mémoire pour n'afficher que les informations concernant certains participants.

On peut prévoir que le dispositif d'enregistrement est du type bistable pour mettre à jour un état binaire des informations, dans lequel l'arrivée d'un appel d'un code correspond à une information, et l'appel suivant du même code à son contraire. Il est également possible, selon une autre forme de réalisation, de prévoir que les moyens d'enregistrement sont propres à garder en mémoire un état cumulatif des appels d'un code déterminé. Dans ce dernier cas, les moyens d'interrogation associés à ces moyens d'enregistrement pour en effectuer la lecture peuvent être prévus pour délivrer une information binaire d'un état ou de son contraire selon la parité du nombre d'appels enregistrés. De préférence, les moyens d'enregistrement comportent une position de mémoire pour chaque code dans laquelle sont propres à être enregistrées les informations d'appel de ce code.

Les moyens de décodage peuvent être agencés pour n'autoriser l'enregistrement d'appels que pour des codes correspondant à une liste ou à une catégorie de codes préétablis, notamment lorsque le réseau de transmision d'appels, en liaison avec lequel le poste de regroupement est destiné à être utilisé, est prévu pour d'autres utilisations telles que par exemple l'appel de personnes.

Les décodeurs équipant de tels postes de regroupement sont de préférence propres à décoder un nombre élevé de codes pour permettre le regroupement d'informations relatives à des participants en nombre supérieur à cinquante et pouvant dépasser plusieurs centaines.

Un exemple de mise en oeuvre de l'invention est décrit ci-après en référence aux dessins annexés, dans lesquels :

la figure 1 représente un schéma d'un réseau de transmission d'appels ;

la figure 2 représente un schéma-bloc d'un poste de regroupement conforme à l'invention ;

la figure 3 est un schéma synoptique de circuits de réception et décodage utilisés dans le poste de regroupement représenté à la figure 2 ; et

les figures 4A, 4B et 4C illustrent l'organisation d'une unité de mémoire de regroupement.

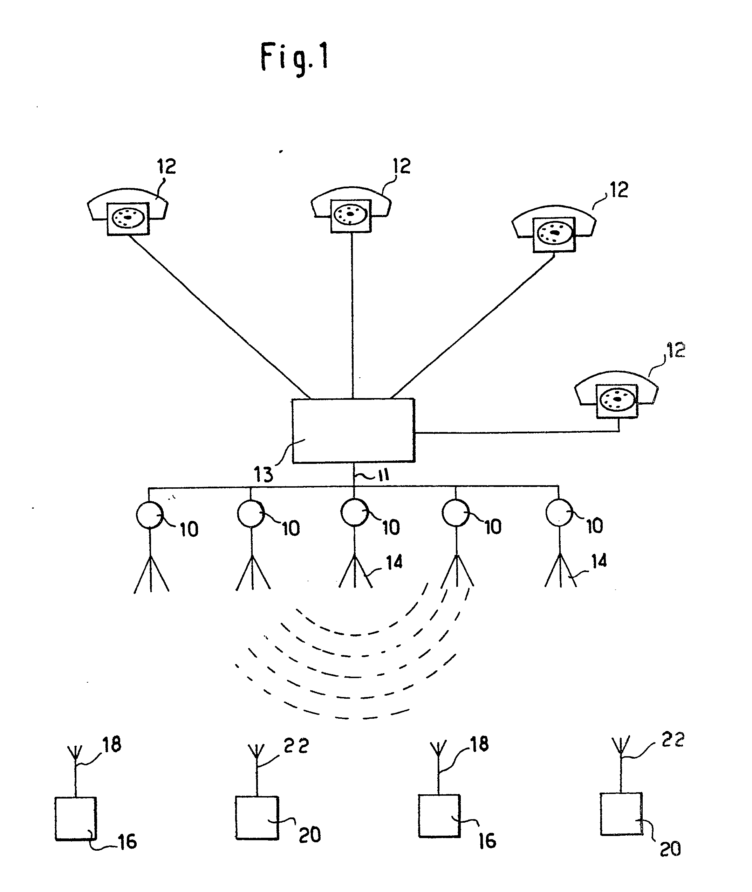

Un réseau de transmission d'appels (figure 1) comprend un ensemble de stations 10 d'émission de signaux hertziens comportant chacun une antenne 14. Ces stations sont toutes reliées à la sortie 11 d'un central d'appels téléphoniques 13 propre à recevoir des appels de codes en provenance des postes 12 du réseau téléphonique et à les retransmettre vers les stations 10. Les signaux hertziens émis sont captés par les antennes 18, ou 22, d'une pluralité de récepteurs 16, respectivement 20. Les récepteurs 16 sont des récepteurs portatifs d'appels de personnes. Les récepteurs 20 équipent des postes de regroupement installés dans des établissements accessibles au public. Ils permettent d'y rassembler les informations concernant la disponibilité d'un ensemble de prestataires de services participants d'une organisation appropriée. Par exemple, un poste de regroupement installé dans une aérogare est agencé pour décoder des appels en provenance d'un certain nombre d'hôtels à chacun desquels est affecté un code. Si un hôtel participant veut indiquer aux postes de regroupement qu'il n'a plus de chambres vacantes, il lui suffit d'appeler le réseau de transmission en composant son numéro de code pour que l'appel soit reçu par les postes de regroupement et enregistré, la réception de cet appel constituant en soi l'information de l'état de non-disponiblité de toutes les chambres de l'hôtel. Si une chambre se libère, l'hôtel peut rappeler le réseau de transmission d'appels en composant son numéro de code. L'enregistrement de l'appel aux postes de regroupement permet d'afficher à nouveau une indication de disponibilité pour cet hôtel en réponse aux interrogations des utilisateurs aux postes de regroupement.

Les signaux hertziens émis par une station 10 sont modulés pour fournir, par exemple, après démodulation, une série de fréquences musicales, ou tonalités, correspondant au numéro de code du participant composé sur le poste téléphonique d'appel. Chaque tonalité correspondant à un caractère déterminé du code. En outre, une fréquence d'intervalle indique le début et/ou la fin d'un message de code.

Un exemple de poste de regroupement des informations correspondant à de tels signaux en provenance d'une pluralité de participants comporte trois parties principales :

— le récepteur 20 ;

— un module de décodage desdits signaux et de reconnaissance de leur appartenance à une liste ou une catégorie de codes préétablis ;

— une unité de regroupement et d'exploitation d'informations.

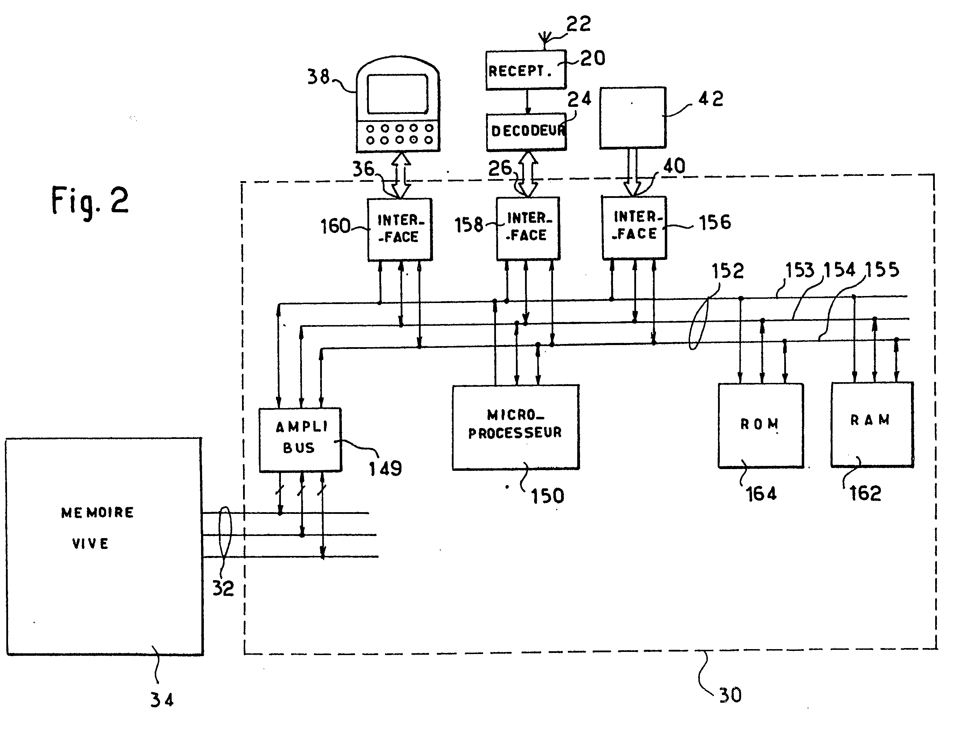

L'architecture générale d'un tel poste est représentée sur la figure 2. Le récepteur 20 équipé de son antenne 22 capte et démodule des signaux hertziens en provenance d'une sation 10. Sa sortie est reliée à l'entrée d'un décodeur multicode 24 qui fournit des informations de code à une entrée multibit 26 d'une unité de gestion 30. L'unité de gestion 30 est reliée par un bus 32 à une mémoire vive 34, dans laquelle l'unité de gestion 30 peut aiguiller une information d'appel d'un code déterminé reçu sur son entrée 26 dans une position de la mémoire 34 correspondant à ce code. L'unité de gestion 30 est également raccordée par un port d'entrée-sortie 36 à un terminal d'exploitation des données regroupées dans le poste, comportant un clavier écran 38, et, par un autre port de données 40, à une mémoire auxiliaire non volatile 42 dont le contenu est propre à être chargé dans la mémoire 34 pour y stocker un certain nombre d'informations connues à l'avance, correspondant à chacun des codes, et un logiciel d'exploitation.

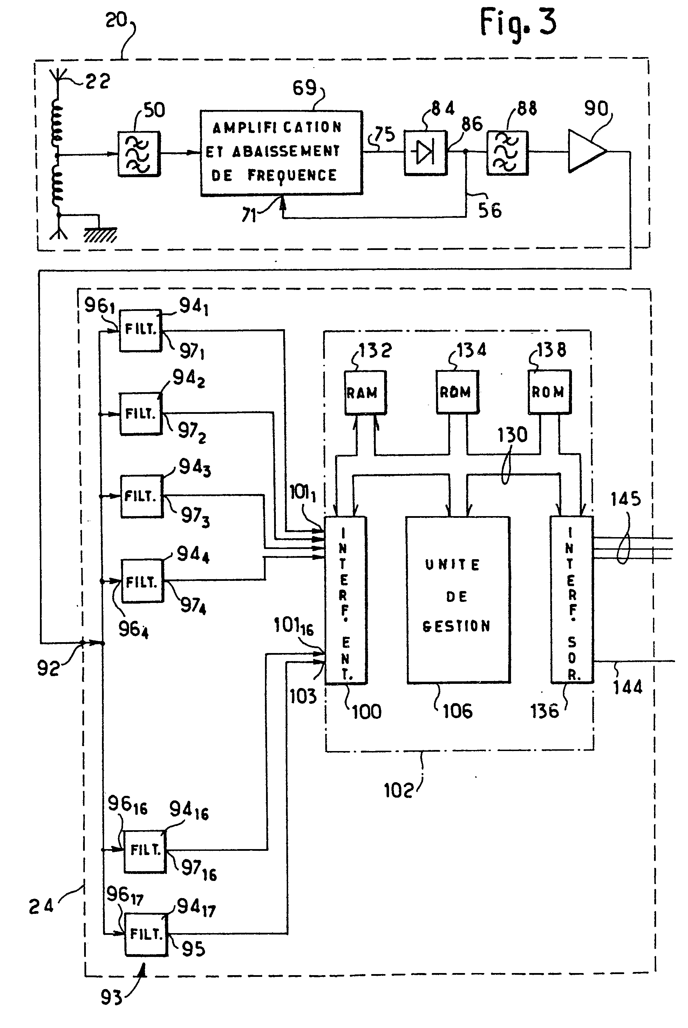

Les signaux reçus par l'antenne 22 (figure 3) de la chaîne de réception 20 sont transmis à l'entrée d'un filtre passebande 50 accordé sur la fréquence de la porteuse des signaux hertziens. A la sortie du filtre 50, ils sont reçus dans un circuit d'amplification et d'abaissement de fréquence 69 dont la sortie 75 est branchée à l'entrée d'un démodulateur 84 à la sortie 86 duquel est branché l'entrée d'une boucle de contrôle automatique de gain 56 raccordée à l'entrée de contrôle de gain 71 du cricuit 69. La sortie 86 est également reliée à l'entrée 71 du circuit 69. La sortie 86 est également reliée à l'entrée d'un filtre passebande basse fréquence 88 qui délivre sur sa sortie des signaux de tonalités différentes, correspondant aux différents caractères (chiffres) du code, transmis à l'entrée d'un amplificateur basse-fréquence 90 dont la sortie est reliée à l'entrée 92 du décodeur multicode 24.

L'entrée 92 est raccordée à chacune des entrées respectives $96_1$ à $96_{17}$ d'une batterie 93 de filtres passe-bande $94_1$ à $94_{17}$. Ces filtres 94 sont des filtres à entrée analogique discrets accordés chacun sur une tonalité respective. Les sorties respectives $97_1$ à $97_{16}$ des filtres $94_1$ à $94_{16}$ sont reliées aux entrées respectives $101_{1-16}$ d'un circuit interface 100 dont une autre entrée 103 reçoit le signal de la sortie 95 du filtre $94_{17}$ accordé sur la fréquence d'intervalle. Le circuit d'interface 100 est propre à réaliser l'adaptation des signaux aux entrées $101_1$ à $101_{16}$ et 103 à un circuit de gestion programmé 102 dont il constitue l'entrée et qui comprend une unité centrale de gestion 106, par exemple du type à microprocesseur.

Le circuit de traitement 102 associé à l'unité de gestion 106 comprend de façon classique un bus de liaison 130 auquel sont raccordés, outre l'unité de gestion 106, une mémoire vive de travail (RAM) 132, l'interface d'entrée 100, une interface de sortie 136, une mémoire morte (ROM) 134 contenant des instructions programmées pour orchestrer le fonctionnement de l'unité de gestion, et une mémoire morte 138 contenant des données d'identification de numéros ou groupe de numéros de code présélectionnés correspondant aux participants à l'organisation.

Les entrées de l'interface 100 sont scrutées par l'unité de gestion 106. La présence d'un signal sur l'une des entrées 101 ou 103 de l'interface 100 fournit une indication de début de message correspondant. Les signaux successifs apparaissant sur les entrées $101_1$ à $101_{16}$ correspondent chacun à la reconnaissance d'une tonalité correspondante par un filtre 94 en sortie du récepteur 20 et sont lus sous le contrôle de l'unité de gestion 106, qui détecte le rang de chaque entrée 101 sur laquelle apparaît un tel signal et enregistre dans la mémoire 132 un caractère de code correspondant à ce rang dans un emplacement de mémoire correspondant à l'ordre d'arrivée de ce signal. La fin du message de code est détectée par l'apparition d'un signal sur l'entrée 103. La mémoire 132 contient alors l'enregistrement du code contenu dans le message hertzien détecté et décodé, sous la forme d'une suite de caractères numériques correspondant à la succession de tonalités démodulées.

Lorsque la réception du message est terminée, l'unité de gestion 106 procède à une comparaison du code ainsi acquis dans la mémoire vive 132 avec les données identifiant les codes autorisés présentes dans la mémoire 138. Il rejette le nouveau code acquis dans cette mémoire s'il ne correspond à aucun des codes identifiés par les inscriptions dans la mémoire 138.

Dans le cas contraire, le microprocesseur transmet sur une des sorties 144 de l'interface de sortie 136, un signal à l'unité de gestion 30, en réponse auquel l'unité de gestion peut autoriser le transfert de l'information d'appel code mémorisé en mémoire 132 par une sortie multibit 145 correspondante de l'interface 136.

L'unité de gestion 30 (figure 2) comprend un microprocesseur 150 connecté à un bus de liaison 152 comportant une liaison d'adresse 153, une liaison de contrôle 154 et une liaison de données 155. A ce bus 152 sont raccordées une interface 156 comportant le port 40 de liaison avec la mémoire auxiliaire 42, une interface 158 comportant le port 26 de liaison avec le décodeur multicode 24 et une interface 160 comportant le port 36 de liaison avec le terminal 38.

Sur la liaison du bus 152 sont également branchées les mémoires coopérant avec le microprocesseur 150, à savoir une mémoire vive 162 et une mémoire morte 164 contenant le logiciel de chargement dans la mémoire vive 34 des programmes et des données de fichiers associées à chaque code de participant, contenus dans la mémoire auxiliaire 42. La liaison bus 152 est reliée à la liaison bus 32 par un amplificateur de bus 149.

La mémoire vive 34 joue deux rôles. Elle permet d'emmagasiner le logiciel de fonctionnement de l'organe de gestion 30 pour permettre non seulement l'acquisition des appels décodés par le décodeur multicode 24 mais également le dialogue entre cette mémoire et le terminal de données 38. Ce logiciel est chargé dans la mémoire 34 à partir de la mémoire auxiliaire 42 afin de le sauvegarder en cas de panne ou d'arrêt de la tension d'alimentation du poste.

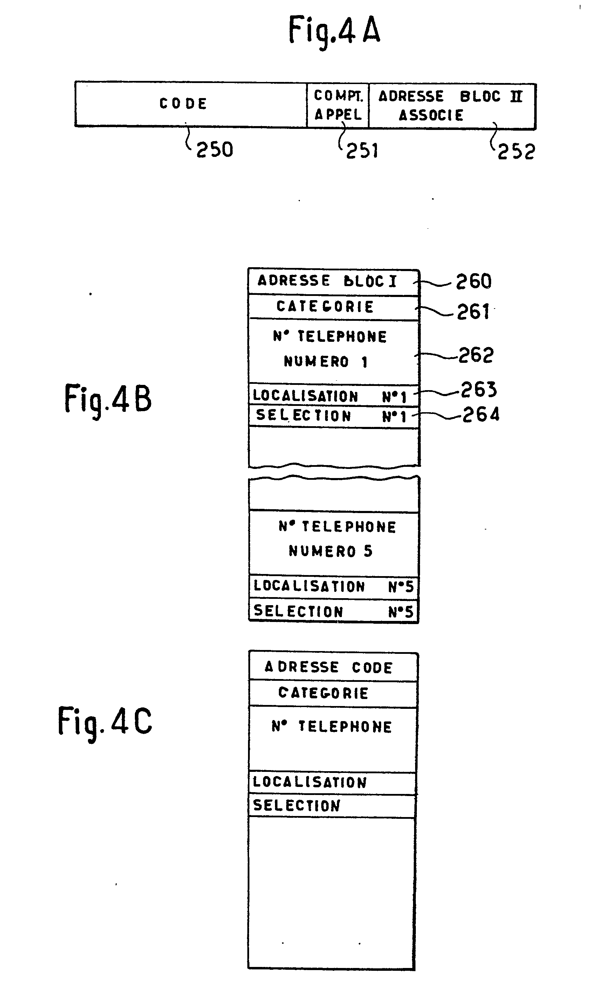

La deuxième fonction de la mémoire 34 est de permettre de constituer un fichier de chaque participant repéré par son numéro de code. A cet effet, la mémoire 34 est organisée en deux types de blocs respectivement I et II. Les blocs de type I (voir figure A4) comprennent chacun six octets par code, divisés en une première position 250, de trois octets, pour l'enregistrement du code de participant respectif, une position 251 d'un octet de capacité pour le comptage des appels successifs reçus à ce numéro de code et une position 252 de deux octets de capacité pour l'inscription de l'adresse d'un bloc de type II situé dans une autre partie de la mémoire et dans lequel sont répertoriées un certain nombre d'informations plus détaillées associées au participant dont le code est mémorisé dans la position 250. Au cours du fonctionnement du poste de regroupement, ce sont les positions du type 251 qui jouent un rôle actif dans le regroupement des informations en provenance des différents participants, des hôtels par exemple. Ainsi, pour 1 000 participants, la mémoire 34 comporte 1 000 blocs de six octets chacun du type I décrit en référence à la figure 4A.

La figure 4B représente un premier exemple de remplissage d'un bloc de mémoire du type II concernant des renseignements propres à chaque participant. L'adresse de chacun de ces blocs se trouve mémorisée dans la position 252 des blocs du type I. Le bloc de la figure 6B est destiné à rassembler un certain nombre d'informations pour chaque hôtel (numéroté de 1 à 5) d'un groupement de petits hôtels identifiés dans le système sous un numéro de code de participant unique. L'adresse du bloc de type I correspondant est inscrite dans la position 260 (deux octets). Un octet de mémoire (position 261) est réservé à une indication de catégorie pour le groupement d'hôtels. Les positions suivantes sont propres à chaque hôtel de la série 1 à 5 et comprennent chacune une mémoire de numéros de téléphone 262 (quatre octets), une mémoire de localisation à un octet 263, et une mémoire de sélection à un octet 264. Cette dernière mémoire est utilisée comme indicateur de tour pour l'affichage tournant des informations lors des interrogations du poste de regroupement par un utilisateur. Les informations caractéristiques de chaque hôtel du groupement sont affichées tour à tour lors d'interrogations successives, sous le contrôle de la mémoire 251, de façon à ne présenter qu'une seule information en réponse à chaque interrogation et à permettre une distribution équitable de ces affichages entre les différents membres du groupement.

Dans le deuxième exemple (figure 4C), le bloc de type II est affecté à un seul hôtel et comporte pour ce dernier, outre l'indication d'adresse du bloc de type I (figure 4A), une indication de catégorie, un numéro de téléphone, une indication de localisation et une indication de sélection pour permettre également une rotation de l'affichage avec des hôtels de catégorie et de localisation comparables et des indications diverses de nature de service.

Pour chaque code, les positions de mémoire inscriptibles 251 et les blocs de type II aux adresses répertoriées en 252 sont propres à être interrogées, à travers la liaison bus 152 par le terminal 38. Le logiciel d'application emmagasiné en mémoire 34 est prévu pour effectuer un traitement élémentaire du nombre d'appels emmagasinés dans la position 251 de chaque bloc de type I interrogé à partir du terminal 38 pour faire apparaître sur l'écran d'affichage l'information de disponibilité et non-disponibilité de l'hôtel participant correspondant à ce bloc.

La mémoire 34 effectue ainsi le regroupement des informations d'état correspondant à l'appel de chaque code dans le cadre d'une organisation groupant une multitude de participants.

Elle permet de tenir ces informations à jour grâce à l'enregistrement d'appels successifs. De la sorte, elle peut fournir à des utilisateurs de chaque poste de regroupement la possibilité de consulter en permanence l'état de disponibilité des participants au système. Bien entendu, pour une région déterminée, il est possible de doter le dispositif d'interrogation par clavier du terminal 38 de possibilités de tri préliminaire parmi les informations stockées dans la mémoire 34. Ainsi, par exemple, dans le cas d'hôtels, l'utilisateur pourra interroger, par l'intermédiaire du clavier 38 et de l'unité de gestion 30, la mémoire 34 pour connaître l'état de disponibilité des seuls hôtels correspondant à un code de localisation et à un code de catégorie déterminée.

Lors de la mise en service du poste de regroupement, la mémoire auxiliaire 42 dans laquelle sont inscrites les instructions du logiciel de commande de l'unité de gestion 30, ainsi que les informations associées à chaque code pour constituer le fichier, est lue pour charger la mémoire 34. A ce moment, le poste est prêt à entrer en fonctionnement. A l'origine, tous les participants sont censés être disponibles. Au fur et à mesure que les participants appellent le poste de regroupement, les inscriptions de ces appels s'effectuent dans les positions de mémoire affectées à chacun de ces codes. Cette opération peut par exemple avoir lieu en début de journée. Par la suite, les informations d'état entrées dans la mémoire 34 peuvent être continuellement modifiées par des appels successifs en successifs en provenance des différents participants. Ainsi, à tout moment, des utilisateurs peuvent, par le biais du terminal 38, se renseigner sur les disponibilités de chambres dans les hôtels d'une zone considérée.

Des postes de regroupement semblables et concernant les mêmes participants peuvent être localisés en différents endroits dans une zone desservie par un réseau de transmission d'appels du type défini plus haut pour constituer un ensemble de fichiers dont la mise à jour s'effectue simultanément au fur et à mesure de l'arrivée des informations qui leur parviennent.

Il est possible que certains de ces fichiers ne se recoupent que partiellement. Tel est le cas lorsque ces fichiers sont établis en des points relativement distants l'un de l'autre et regroupent chacun des informations sur des hôtels d'une zone respective autour de ces points ; seuls les hôtels établis dans un territoire à l'intersection de ces zones figurent en commun dans ces fichiers.

De tels postes de regroupement permettent d'obtenir ainsi à bon marché et en utilisant une infrastructure déjà existante, une dissémination d'informations utiles en direction du public. Ils permettent aussi aux établissements participants d'améliorer leur coefficient de remplissage en affichant à chaque moment de la journée l'existence de disponibilités éventuelles dès leur apparition. Cet objectif est atteint sans nécessiter d'investissements très onéreux comparables à ceux des systèmes de réservation et d'information traditionnels utilisant des réseaux de transmission par fil. La mise en place d'organisations de regroupement d'informations et de tenue de fichiers qui vient d'être décrite ne nécessite pas d'allocation de fréquences hertziennes particulières. Leur coût de fonctionnement est faible, chaque mise à jour des fichiers par un appel correspondant par exemple au paiement d'une taxe de base au tarif en vigueur sur le réseau de transmission d'appel utilisé.

**Revendications**

1. Procédé de collecte et de regroupement d'informations relatives à une pluralité de participants dispersés affectés chacun d'au moins un code respectif, auquel est associé un numéro d'appel téléphonique, selon lequel on compose au moins un numéro constituant ce code à partir d'un poste téléphonique ordinaire, lequel transmet ce numéro par voie téléphonique vers un central d'appel téléphonique (13) propre à recevoir de tels appels de code en provenance des postes (12) et à les retransmettre vers au moins une station (10) d'émission de signaux hertziens, laquelle transmet à son tour ces codes sous forme de signaux hertziens codés respectifs par une antenne (14), caractérisé en ce qu'on reçoit (22) et on décode (24) lesdits signaux hertziens en au moins un poste de regroupement (20) pour reconnaître les codes respectifs et on y enregistre (30, 34) les appels successifs correspondant à chaque code afin de tenir à jour en ce poste un état des informations relatives à chaque participant de l'ensemble.

2. Procédé selon la revendication 1, caractérisé en ce que les opérations de réception (22) et de décodage (24) sont faites en une pluralité de postes de regroupement dispersés en chacun desquels on enregistre (30, 34) les appels correspondant à chaque code afin de disposer simultanément en chacun de ces postes des informations relatives à chaque participant de l'ensemble.

3. Procédé selon l'une des revendications 1 et 2, caractérisé en ce qu'on enregistre les appels successifs (251) correspondant à chaque code en chacun desdits postes pour y tenir à jour un état des informations correspondantes pour chaque participant.

4. Procédé selon l'une des revendications 1 à 3, caractérisé en ce que les informations en chaque poste de regroupement sont destinées à une pluralité d'utilisateurs.

5. Procédé selon l'une des revendications 1 à 4, caractérisé en ce qu'on associe à chaque code en un tel poste de regroupement des données complémentaires (252, 260 à 264) propres à être exploitées en même temps que l'information mise à jour pour chaque participant et en ce que l'un des participants au moins est un groupement et les données complémentaires concernent des membres respectifs de ce groupement.

6. Procédé selon l'une des revendications 1 à 5, caractérisé en ce que chaque information transmise est représentée par l'appel d'un code respectif ou une combinaison d'appels de tels codes.

7. Poste de regroupement d'informations pour la mise en œuvre du procédé selon l'une des revendications précédentes, caractérisé en ce qu'il comporte un récepteur (22) desdits signaux hertziens codés émis par une station d'émission (10), un décodeur (24) propres à déchiffrer les signaux reçus pour reconnaître les codes correspondant auxdits participants, et des moyens d'enregistrement (30, 34) des appels successifs correspondant à chaque code pour tenir à jour un état des informations correspondantes relativement à chaque participant dudit ensemble.

8. Poste de regroupement selon la revendication 7, caractérisé en ce que lesdits moyens d'enregistrement sont propres à mémoriser l'information représentée par chaque appel de code pour tenir à jour l'état correspondant (34).

9. Poste de regroupement selon l'une des revendications 7 et 8, caractérisé en ce que les moyens d'enregistrement comprennent au moins une position de mémoire propre à chaque participant pour enregistrer un appel respectif en réponse au déchiffrage des signaux codés correspondants par le décodeur.

10. Poste de regroupement selon la revendication 9, caractérisé en ce que ladite mémoire est du type bistable pour tenir à jour un état binaire desdites informations.

11. Poste selon la revendication 9, caractérisé en ce que ladite position de mémoire respective pour chaque participant est propre à enregistrer les appels successifs dans l'ordre de leur arrivée.

12. Poste selon la revendication 11, caractérisé en ce qu'il comprend en outre des moyens de lecture (38) propres à délivrer une information d'état binaire, telle que la disponibilité ou non-disponibilité du participant, en réponse à la parité du nombre d'appels respectifs enregistrés dans lesdits moyens d'enregistrement.

13. Poste de regroupement selon l'une des revendications 7 à 12, caractérisé en ce que les moyens d'enregistrement sont associés à un dispositif de fichier (250, 251, 252, 260 à 264) propre à rassembler pour l'ensemble des participants, au moins une donnée relative à chacun d'entre eux, en vue de permettre d'associer cette donnée et l'information tenue à jour pour chaque participant.

14. Poste de regroupement selon la revendication 13, caractérisé en ce qu'il comprend des moyens d'interrogation (38) pour extraire ladite information desdits moyens d'enregistrement en association avec ladite donnée.

15. Poste selon la revendication 14, caractérisé en ce qu'il comprend en outre des moyens de présentation (38) desdites informations en réponse à l'interrogation desdits moyens d'enregistrement.

16. Poste selon l'une des revendications 7 à 15, caractérisé en ce que les moyens d'enregistrement comprennent une capacité de mémoire pour chaque code propre à stocker une pluralité de données détaillées relatives au participant auquel est affecté le code respectif (250 à 264).

17. Poste selon la revendication 16, caractérisé en ce qu'il comprend des moyens pour sélectionner les participants en fonction des informations enregistrées dans les moyens d'enregistrement et de critères définis sur la base desdites données détaillées (260 à 264).

18. Poste selon l'une des revendications 7 à 17 pour un réseau de transmission d'appels de codes permettant des utilisations différentes, caractérisé en ce que le décodeur comprend en outre des moyens pour sélectioner parmi les codes correspondant aux signaux hertziens reçus par le récepteur les seuls codes répondant à des données d'identification pré-enregistrées (42).

19. Poste de regroupement selon l'une des revendications 7 à 18, caractérisé en ce que le décodeur (24) est propre à reconnaître des codes correspondant à au moins cinquante participants différents.

**Claims**

1. A method of collecting and regrouping data relating to a plurality of dispersed participants each having at least one respective code attributed thereto, which code is associated with a telephone call number, wherein at least one number constituting said code is dialled from an ordinary telephone set, which transmits the number via a telephone path to a telephone exchange (13) suitable for receiving such coded calls from telephone sets (12) and for retransmitting them to at least one station (10) for transmitting radio signals, which station then transmits these codes in the form of respective encoded radio signals via an aerial, characterized in that the said radio signals are received (22) and decoded (24) at at least one regrouping station (20) for recognizing the respective codes, and the successive calls corresponding to each code are recorded (30, 34) in order to update at said regrouping station a list of data relating to each participant in the set.

2. A method according to claim 1, characterized in that the operations of receiving (22) and decoding (24) are performed at a plurality of dispersed regrouping stations in each of which the calls corresponding to each code are recorded (30, 34) in order to have data simultaneously available at each of said regrouping stations relating to each participant in the group.

3. A method according to claim 1 or 2, characterized in that the successive calls (251) corresponding to each code are recorded at each of the said regrouping stations to update a list thereat of the corresponding data for each participant.

4. A method according to claim 1, 2 or 3, characterized in that the data at each regrouping station is intended for a plurality of users.

5. A method according to any one of claims 1 to 4, characterized in that each code is associated in such a regrouping station with complementary data (252, 260, 264) suitable for being exploited at the same time as the updated data for each participant, and in that at least one of the participants is a group and the complementary data concerns the respective members of the group.

6. A method according to any one of claims 1 to 5, characterized in that each transmitted data item is represented by a call to a respective code or a combination of calls to such codes.

7. A data regrouping station for implementing the method according to any preceding claim, characterized in that it includes a receiver (22) for said coded radio signals transmitted by a transmitter station (10), a decoder (24) suitable for decoding the received signals to recognize the codes corresponding to the said participants, and recording means (30, 34) for recording the successive calls corresponding to each code to update a list of corresponding data relating to each participant of the said set.

8. A regrouping station according to claim 7, characterized in that the said recording means are suitable for recording the data represented by each code call to update the corresponding list (34).

9. A regrouping station according to claim 7 or 8, characterized in that the recording means include at least one memory location belonging to each participant for recording a respective call in response to the decoder decoding the corresponding coded signals.

10. A regrouping station according to claim 9, characterized in that the said memory is of the bistable type to update a binary list of the said data.

11. A station according to claim 9, characterized in that the said respective memory locations for each participant is suitable for recording the successive calls in their order of arrival.

12. A station according to claim 11, characterized in that it further includes reading means (18) suitable for delivering binary state data, such as the availability or non-availability of a participant, in response to the parity of the number of respective calls recorded in the said recording means.

13. A regrouping station according to any one of claims 7 to 12, characterized in that the recording means are associated with a file device (250, 251, 252, 260 to 264) suitable for bringing together at least one data item over the set of participants and relating to each of them, to associate said data item with the updated data for each participant.

14. A regrouping station according to claim 13, characterized in that it includes interrogation means (38) for extracting the said updated data from the said recording means in association with the said data item.

15. A station according to claim 14, characterized in that it further includes display means (38) for displaying the said data in response to interrogation of the said recording means.

16. A station according to any one of claims 7 to 15, characterized in that the recording means include memory capacity for each code suitable for storing a plurality of detailed data items relating to the participant to which the respective code (250 to 264) is attributed.

17. A station according to claim 16, characterized in that it includes means for selecting participants as a function of the data stored in the recording means and on criteria defined on the basis of the said detailed data (260 to 264).

18. A station according to any one of claims 7 to 17 for a code call transmission network enabling different uses, characterized in that the decoder further includes means for selecting from codes corresponding to the radio signals received by the receiver only those codes which correspond to pre-recorded identification data.

19. A regrouping station according to any one of claims 7 to 18, characterized in that the decoder (24) is suitable for recognizing the codes corresponding to at least fifty different participants.

**Patentansprüche**

1. Verfahren zum Erfassen und Zusammenfassen von Informationen, die eine Mehrzahl von verstreuten Teilnehmern betreffen, denen jeweils ein Code zugewiesen ist, dem eine Fernsprecher-Rufnummer zugeordnet ist, wonach mindestens eine Teilnehmernummer zusammengesetzt wird, die diesen Code bildet, ausgehend von einem normalen Fernsprechapparat, der diese Nummer auf dem Sprechweg in eine Fernsprechzentrale (13) überträgt, die diese von Fernsprechapparaten ausgehenden Coderufe aufnehmen kann und sie in mindestens eine Funksignal-Sendestation (10) umleitet, die ihrerseits diese Codes in Form von entsprechenden codierten Funksignalen mittels einer Antenne (14) sendet, dadurch gekennzeichnet, daß die genannten Funksignale in mindestens einer Zusammenfassungsstation (20) empfangen (22) und decodiert (24) werden, um die jeweiligen Codes zu identifizieren, und daß dort die jedem Code entsprechenden aufeinanderfolgenden Anrufe aufgezeichnet werden (30, 34), um in dieser Station einen Informationszustand bezüglich jedes Teilnehmers der Gruppe auf dem laufenden zu halten.

2. Verfahren nach Anspruch 1, dadurch gekennzeichnet, daß die Empfangsvorgänge (22) und die Decodiervorgänge (24) in einer Mehrzahl von verstreuten Zusammenfassungstationen vorgenommen werden, in welchen jeweils die jedem Code entsprechenden Anrufe aufgezeichnet werden (30, 34), um zur gleichen Zeit in jeder dieser Stationen über die Informationen zu verfügen, die jeden Teilnehmer der Gruppe betreffen.

3. Verfahren nach Anspruch 1 oder 2, dadurch gekennzeichnet, daß die jedem Code entsprechenden aufeinanderfolgenden Anrufe (251) in jeder der genannten Stationen aufgezeichnet werden, um dort einen Zustand der entsprechenden Informationen für jeden Teilnehmer auf dem laufenden zu halten.

4. Verfahren nach einem der Ansprüche 1 bis 3, dadurch gekennzeichnet, daß die Informationen in jeder Zusammenfassungsstation für eine Mehrzahl von Benutzern bestimmt sind.

5. Verfahren nach einem der Ansprüche 1 bis 4, dadurch gekennzeichnet, daß mit jedem Code in einer solchen Zusammenfassungsstation zusätzliche Daten (252, 260 bis 264) verbunden werden, die gleichzeitig mit der auf dem laufenden gehaltenen Information für jeden Teilnehmer ausgewertet werden können, und daß mindestens einer der Teilnehmer ein Zusammenschluß ist und die zusätzlichen Daten jeweilige Mitglieder dieses Zusammenschlusses betreffen.

6. Verfahren nach einem der Ansprüche 1 bis 5, dadurch gekennzeichnet, daß jede gesendete Information dargestellt wird durch den Anruf eines jeweiligen Codes oder einer Kombination von Anrufen derartiger Codes.

7. Station zur Zusammenfassung von Informationen, zur Ansübung des Verfahrens nach einem der vorhergehenden Ansprüche, dadurch gekennzeichnet, daß ein Empfänger (22) für die von einer Sendestation (10) gesendeten codierten Funksignale vorgesehen ist, ferner ein Decoder (24), der die empfangenen Signale decodieren kann, um die Codes zu identifizieren, die den Teilnehmern entsprechen, sowie eine Einrichtung (30, 34) zur Aufzeichnung der aufeinanderfolgenden Anrufe, die jedem Code entsprechen, um einen Zustand der entsprechenden Informationen bezüglich jedes Teilnehmer der genannten Gruppe auf dem laufenden zu halten.

8. Station zur Zusammenfassung, nach Anspruch 7, dadurch gekennzeichnet, daß die Aufzeichnungseinrichtung geeignet ist, die von jedem Codeanruf dargestellte Information zu speichern, um den entsprechenden Zustand auf dem laufenden zu halten (34).

9. Station zur Zusammenfassung, nach Anspruch 7 oder 8, dadurch gekennzeichnet, daß die Aufzeichnungseinrichtung mindestens einen Speicherplatz aufweist, der jedem Teilnehmer eigentümlich ist, um einen jeweiligen Anruf nach Maßgabe der Decodierung der entsprechenden codierten Signale durch den Decoder aufzuzeichnen.

10. Station zur Zusammenfassung nach Anspruch 9, dadurch gekennzeichnet, daß es sich bei dem Speicher um einen bistabilen Speicher handelt, um einen Binärzustand der Informationen auf dem laufenden zu halten.

11. Station nach Anspruch 9, dadurch gekennzeichnet, daß der genannte jeweilige Speicherplatz für jeden Teilnehmer geeignet ist, die aufeinanderfolgenden Anrufe in der Reihenfolge ihres Eintreffens aufzuzeichnen.

12. Station nach Anspruch 11, dadurch gekennzeichnet, daß außerdem eine Wiedergabeeinrichtung (38) vorgesehen ist, die zur Abgabe einer binären Zustandsinformation, wie etwa die Bereitschaft oder Nichtbereitschaft des Teilnehmers, geeignet ist, nach Maßgabe der Parität der Zahl der jeweiligen Anrufe, die in der genannten Aufzeichnungseinrichtung aufgezeichnet sind.

13. Station zur Zusammenfassung nach einem der Ansprüche 7 bis 12, dadurch gekennzeichnet, daß die Aufzeichnungseinrichtung einer Dateivorrichtung (250, 251, 252, 260 bis 264) zugeordnet ist, die geeignet ist, für die Gruppe der Teilnehmer mindestens eine Größe zusammenzustellen, die jeden von ihnen betrifft, um es zu ermöglichen, diese Größe und die auf dem laufenden gehaltene Information für jeden Teilnehmer zu verbinden.

14. Station zur Zusammenfassung nach Anspruch 13, dadurch gekennzeichnet, daß eine Abrufeinrichtung (38) vorgesehen ist, um diese Information in Verbindung mit der genannten Größe aus der Aufzeichnungseinrichtung zu entnehmen.

15. Station nach Anspruch 14, dadurch gekennzeichnet, daß außerdem eine Ausgabeeinrichtung (38) für die genannten Informationen nach Maßgabe der Abfrage der genannten Aufzeichnungseinrichtung vorgesehen ist.

16. Station nach einem der Ansprüche 7 bis 15, dadurch gekennzeichnet, daß die Aufzeichnungseinrichtung eine Speicherkapazität für jeden Code besitzt, geeignet zum Speichern einer Mehrzahl von Einzeldaten, die auf den Teilnehmer bezogen sind, dem der jeweilige Code zugewiesen ist (250 bis 264).

17. Station nach Anspruch 16, dadurch gekennzeichnet, daß eine Einrichtung zum Auswählen der Teilnehmer in Abhängigkeit von den in der Aufzeichnungseinrichtung aufgezeichneten Informationen und von Kriterien vorgesehen ist, die auf der Grundlage der genannten Einzeldaten definiert sind (260, 264).

18. Station nach einem der Ansprüche 7 bis 17, für ein Netz zur Übertragung von Codeanrufen für unterschiedliche Benutzung, dadurch gekennzeichnet, daß der Decoder außerdem eine Einrichtung zum Auswählen zwischen den Codes aufweist, die den durch den Empfänger aufgefangenen Funksignalen entsprechen, wobei die einzelnen Codes den voraufgezeichneten Identifikationsdaten (42) entsprechen.

19. Station zur Zusammenfassung nach einem der Ansprüche 7 bis 18, dadurch gekennzeichnet, daß der Decoder (24) geeignet ist zum Erkennen der Codes, die midnestens fünfzig verschiedenen Teilnehmern entsprechen.

# Fig.1

# Fig. 2

38

RECEPT. 20 — 22

DECODEUR 24

42

36        26        40

160  INTER-FACE    158  INTER-FACE    INTER-FACE  156

152    153 154 155

AMPLI BUS    149

MICRO-PROCESSEUR

ROM    RAM

150    164    162

MEMOIRE VIVE

32

34    30

0 051 029

2

Fig. 3

# Fig.4 A

| CODE | COMPT. APPEL | ADRESSE BLOC II ASSOCIE |
|------|--------------|-------------------------|
| 250  | 251          | 252                     |

## Fig.4 B

| |
|---|
| ADRESSE BLOC I — 260 |
| CATEGORIE — 261 |
| N° TELEPHONE NUMERO 1 — 262 |
| LOCALISATION N°1 — 263 |
| SELECTION N°1 — 264 |
| |

| |
|---|
| N° TELEPHONE NUMERO 5 |
| LOCALISATION N°5 |
| SELECTION N°5 |

## Fig.4 C

| |
|---|
| ADRESSE CODE |
| CATEGORIE |
| N° TELEPHONE |
| LOCALISATION |
| SELECTION |
| |